# EUROPÄISCHE PATENTSCHRIFT

(11) **EP 3 795 959 B1**
(45) Veröffentlichungstag und Bekanntmachung des Hinweises auf die Patenterteilung: **24.01.2024**
(21) Anmeldenummer: 20196608.2
(22) Anmeldetag: 17.09.2020
(51) Int. Cl.: G01G 23/01, G01G 23/48, G01G 19/08

(54) **VERFAHREN ZUM KALIBRIEREN VON ACHS- ODER RADLASTSENSOREN**
METHOD FOR CALIBRATING AXLE OR WHEEL LOAD SENSORS
PROCÉDÉ DE CALIBRAGE DES CAPTEURS DE CHARGE SUR ESSIEU OU SUR ROUE

(30) Priorität: 20.09.2019 DE 102019214403; 15.10.2019 DE 102019215823
(43) Veröffentlichungstag der Anmeldung: 24.03.2021
(73) Patentinhaber: Continental Automotive Technologies GmbH, 30165 Hannover (DE)
(72) Erfinder: Bartholomäus, Ulf, 65824 Schwalbach a. Ts. (DE); Streif, Christin, 65824 Schwalbach a. Ts. (DE); Goldschmidt, Florian, 65824 Schwalbach a. Ts. (DE)
(74) Vertreter: Continental Corporation

(56) Entgegenhaltungen:
- DE-A1- 19 726 849
- KR-B1- 101 179 533

## Beschreibung

Die Erfindung betrifft ein Verfahren zum Kalibrieren von Achs- oder Radlastsensoren, insbesondere zum Kalibrieren von Achs- oder Radlastsensoren in einem Nutzfahrzeug.

Aus verschiedenen Gründen kann es erforderlich sein, das Gewicht eines Fahrzeugs zu bestimmen. Beispielsweise kann es erforderlich sein zu bestimmen, ob die Nutzlast oder das zulässige Gesamtgewicht eines Fahrzeugs nach dem Beladen des Fahrzeugs überschritten wird. Ein Überschreiten von Nutzlast bzw. zulässigem Gesamtgewicht ist generell aus Sicherheitsgründen nicht erlaubt. Auch manche Straßen oder Brücken dürfen nur befahren werden, wenn ein vorgegebenes Maximalgewicht nicht überschritten wird. Weiterhin kann beispielsweise auch die auf bestimmten Straßen anfallende Maut für ein Fahrzeug in Abhängigkeit des Fahrzeuggewichtes berechnet werden. Weiterhin kann es für verschiedene Sicherheitsanwendungen erforderlich sein, während der Fahrt eine Verteilung der Last auf die verschiedenen Achsen bzw. Räder zu bestimmen.

Eine einfache Möglichkeit der Gewichtsbestimmung und Achslastverteilung besteht in der Anbringung von Achslastsensoren an einer oder mehreren Achsen eines Fahrzeugs.

Bei allen Anwendungen ist es dabei jedoch erforderlich, dass die Messungen stets möglichst genau und zuverlässig erfolgen.

Aus KR 101 179 533 B1 ist ein Verfahren zum Messen eines Gewichts eines Fahrzeugs bekannt, wobei das Verfahren Reifendruckwerte verwendet. Das Gewicht wird dabei unter Verwendung von Reifendruckwerten vor und nach einem Laden von Gütern auf das Fahrzeug berechnet. Zum Messen der Reifendruckwerte sind Drucksensoren in Reifen des Fahrzeugs vorgesehen.

Eine Fahrzeuglast-Messvorrichtung mit Lastsensoren, die an Elementen angebracht sind, auf die eine Last einwirkt, sowie ein Verfahren zum Messen einer Fahrzeuglast sind aus DE 197 26 849 A1 bekannt. Das Verfahren kann ein Erfassen einer ersten Temperaturinformation, ein Erfassen einer zweiten Temperaturinformation sowie ein Vergleichen einer Differenz zwischen der ersten und der zweiten Temperaturinformation mit einem vorbestimmten Wert umfassen.

Aufgabe der Erfindung ist es, ein Verfahren zum Kalibrieren eines Achslastsensors zur Verfügung zu stellen, welches möglichst kostengünstig, einfach und zuverlässig implementiert werden kann und eine hohe Messgenauigkeit des Sensors gewährleistet.

Diese Aufgabe wird durch ein Verfahren gemäß Anspruch 1 gelöst. Ausgestaltungen und Weiterbildungen des Erfindungsgedankens sind Gegenstand von abhängigen Ansprüchen.

Es wird ein Verfahren zum Kalibrieren eines Systems mit einer Vielzahl von Sensoren beschrieben, wobei jeder der Sensoren an einem Element eines Fahrzeugs, nämlich an einer Achse des Fahrzeugs und/oder einem Rad oder einem Federsystem des Fahrzeugs, angeordnet ist. Das Verfahren weist auf: mit jedem der Vielzahl von Sensoren Durchführen einer ersten Anzahl an Messungen einer Achslast oder Radlast bei Stillstand des unbeladenen Fahrzeugs, mit jedem der Vielzahl von Sensoren Durchführen einer ersten Anzahl an Messungen einer Achslast oder Radlast bei Stillstand des beladenen Fahrzeugs, wobei jede der Messungen jeweils unter Einfluss identischer Störgrößen wie eine der mit dem unbeladenen Fahrzeug durchgeführten Messungen durchgeführt wird, mit jedem der Vielzahl von Sensoren Durchführen einer Vielzahl von Messungen einer Achslast oder Radlast in regelmäßigen Abständen während der Fahrt bei beladenem Fahrzeug, Bestimmen wenigstens einer Störgröße in regelmäßigen Abständen während der Fahrt bei beladenem Fahrzeug, und Erstellen eines Algorithmus, welcher die bei Stillstand des unbeladenen Fahrzeugs bestimmten Messwerte, die bei Stillstand des beladenen Fahrzeugs bestimmten Messwerte, die während der Fahrt des beladenen Fahrzeugs bestimmten Messwerte, sowie die Störgrößen bei Stillstand des Fahrzeugs und während der Fahrt des Fahrzeugs berücksichtigt, wobei die Störgrößen eine Umgebungstemperatur aufweisen, wobei anhand dieses Algorithmus im Betrieb des Fahrzeugs durch eine kontinuierliche Gewichtsmessung erhaltene Messwerte an sich ändernde Umgebungsbedingungen, nämlich eine veränderte Umgebungstemperatur, angepasst werden können, wobei der Algorithmus ein selbstlernender Algorithmus ist, so dass die jeweils durch die kontinuierliche Messung erhaltenen Daten mit einem gespeicherten Modell zur Temperaturkalibrierung verglichen werden, wodurch alterungsbedingte Veränderungen der Achse, der Federung oder des Rades erkannt werden.

Dies Verfahren kann einfach und kostengünstig implementiert werden und gewährleistet eine hohe Messgenauigkeit der Achs- oder Radlastsensoren.

Das Verfahren kann weiterhin das Bestimmen eines Fahrzeug-Gesamtgewichts anhand der mit jedem der Vielzahl von Sensoren bei Stillstand des beladenen Fahrzeugs ermittelten Messwerte aufweisen.

Informationen über ein aktuelles Fahrzeuggewicht können aus den verschiedensten Gründen erforderlich sein.

Das Fahrzeug-Gesamtgewicht während der Messungen der Achslast oder Radlast bei Stillstand des beladenen Fahrzeugs kann dabei bekannt sein.

Die Störgrößen weisen eine Umgebungstemperatur und gemäß einer Ausführungsform eine Temperatur der Elemente auf, an welchen die Vielzahl von Sensoren angebracht sind.

Dies sind in der Regel diejenigen Störgrößen, welche die Messungen am meisten beeinflussen können.

Jeder der Vielzahl von Sensoren kann dazu ausgebildet sein, eine Dehnung oder Stauchung des entsprechenden Elementes des Fahrzeugs zu bestimmen, wobei die Achslast oder Radlast von der bestimmten Dehnung oder Stauchung abhängt.

Das Messen einer Dehnung oder Stauchung entsprechender Fahrzeugelemente beispielsweise mittels Dehnungsmessstreifen oder anderer funktionsgleicher Sensoren, wie z. B. piezoresistiver Elemente, ist eine verhältnismäßig einfache und kostengünstige Art und Weise, eine Achs- oder Radlast zu bestimmen.

Die Messungen der Achslast oder Radlast bei Stillstand des unbeladenen und des beladenen Fahrzeugs können wenigstens bei einer definierten Umgebungstemperatur durchgeführt werden.

Dadurch sind die Rahmenbedingungen der Messungen identisch. Der einzige Unterschied liegt in der unterschiedlichen Beladung des Fahrzeugs, so dass das Fahrzeuggewicht eindeutig bestimmbar ist.

Die Messungen der Achslast oder Radlast bei Stillstand des unbeladenen und des beladenen Fahrzeugs können auch bei einer Vielzahl unterschiedlicher definierter Temperaturen in einem Temperaturbereich von -40 °C bis +100 °C durchgeführt werden.

Dadurch kann beispielsweise der Einfluss der Umgebungstemperatur auf die Messungen ermittelt werden.

Das Verfahren kann weiterhin das Vergleichen des bei Stillstand des beladenen Fahrzeugs bestimmten Gesamtgewichts mit dem bekannten Fahrzeug-Gesamtgewicht, und das Bestimmen des Einflusses der Störgrößen auf die wenigstens eine durchgeführte Messung aufweisen.

Das Verfahren kann weiterhin das Durchführen einer ersten Messung der Achslast oder Radlast eines beladenen Fahrzeugs bei Stillstand des Fahrzeugs, das Bestimmen von Störgrößen, welche die erste Messung beeinflussen, das Kompensieren der Messergebnisse der ersten Messung anhand des zuvor erstellten Algorithmus und anhand der bestimmten Störgrößen, das Durchführen weiterer Messungen während der Fahrt des beladenen Fahrzeugs, das Vergleichen der Messergebnisse der weiteren Messungen mit dem kompensierten Messergebnis der ersten Messung, und die Korrektur der Messergebnisse der weiteren Messungen anhand des Vergleiches aufweisen.

So können im Betrieb des Fahrzeugs die Messungen immer anhand der bestimmten Störgrößen korrigiert werden. Dadurch erhöht sich die Messgenauigkeit.

Das Verfahren kann weiterhin das kontinuierliche Bestimmen der Störgrößen während der Fahrt des Fahrzeugs, und die Korrektur der Messergebnisse der weiteren Messungen anhand der bestimmten Störgrößen aufweisen.

Die Erfindung wird nachfolgend anhand der Figuren der Zeichnung näher erläutert, wobei gleiche oder ähnliche Elemente mit denselben Bezugszeichen versehen sind. Es zeigt:
- Figur 1: in einer skizzenhaften Darstellung ein Nutzfahrzeug,
- Figur 2: in einer skizzenhaften Darstellung ein Nutzfahrzeug mit Achslastsensoren,
- Figur 3: in einem Ablaufdiagramm ein beispielhaftes Verfahren zum Kalibrieren eines Achslastsensors,
- Figur 4: in einem Diagramm einen Verlauf einer von einem Achslastsensor bestimmten Achslast in einem ersten Zeitraum, und
- Figur 5: in einem Ablaufdiagram ein Verfahren zum Kalibrieren eines Achslastsensors gemäß einem Beispiel.

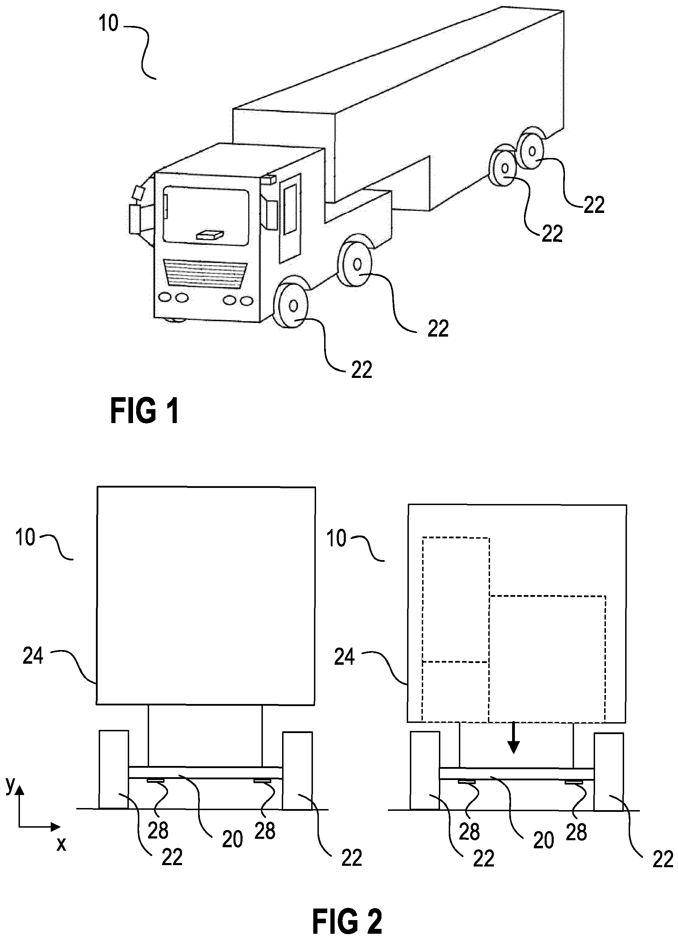

Figur 1 zeigt schematisch ein Nutzfahrzeug 10, insbesondere einen Lastkraftwagen (LKW). Das Nutzfahrzeug 10 weist eine Vielzahl von Rädern 22 auf. Das Leergewicht eines Nutzfahrzeugs 10 ist in der Regel bekannt. Das Bestimmen des Gewichts einer auf dem Nutzfahrzeug 10 geladenen Ladung, bzw. des Gesamtgewichtes von Fahrzeug 10 und Ladung, kann aus verschiedenen Gründen erforderlich sein. Beispielsweise kann das Gewicht bestimmt werden um auszuschließen, dass eine Nutzlast bzw. ein zulässiges Gesamtgewicht des Nutzfahrzeugs 10 überschritten wurde. Zudem können für bestimmte Straßen oder Straßenabschnitte gewichtsabhängige Mautgebühren fällig werden. Auch das Bestimmen einer (veränderlichen) Verteilung der Last auf die verschiedenen Achsen oder Räder 22 während der Fahrt kann erforderlich sein.

Nun Bezug nehmend auf Figur 2 ist ein Nutzfahrzeug 10 mit Rädern 22 dargestellt, welche mittels einer Achse 20 miteinander verbunden sind. Ein Nutzfahrzeug 10 weist in der Regel mindestens zwei Achsen auf, von welchen in der in Figur 2 dargestellten Schnittansicht jedoch lediglich eine Achse sichtbar ist. Mit jedem Ende einer Achse 20 ist dabei beispielsweise ein Rad 22 verbunden. Es ist jedoch ebenfalls möglich, dass mit jedem Ende einer Achse 20 zwei Räder 22 verbunden sind (so genannte Zwillingsbereifung oder Doppelbereifung). Das Fahrzeug 10 weist weiterhin einen Fahrzeugaufbau 24 auf. Der Fahrzeugaufbau 24 ist dazu ausgebildet, Ladung aufzunehmen.

Figur 2 zeigt das Fahrzeug 10 einmal in einem unbeladenen Zustand (links) und einmal in einem beladenen Zustand (rechts, angedeutet durch gestrichelt dargestellte Ladung). Um das Gesamtgewicht des Fahrzeugs 10 zu bestimmen, wird an wenigstens zwei Achsen 20 des Fahrzeugs 10 beispielsweise jeweils mindestens ein Sensor 28 angebracht. In dem in Figur 2 dargestellten Beispiel sind an der Achse 20 zwei Sensoren 28 angebracht. Dabei ist jeder der Sensoren 28 an einer unterschiedlichen Stelle der Achse 20 angeordnet. Beispielsweise kann jeder Sensor 28 an einem unterschiedlichen Ende der Achse 20 angeordnet sein. Es ist jedoch auch möglich, lediglich einen einzigen Sensor 28 an der Achse 20 anzubringen. Ein einzelner Sensor 28 könnte beispielweise mittig an der Achse 20 angeordnet sein. An den verschiedenen Achsen 20 eines Fahrzeugs 10 können unterschiedlich viele Sensoren 28 angebracht sein. Beispielsweise kann an einer der Achsen 20 ein einzelner Sensor 28 angebracht sein, während an einer anderen Achse 20 zwei Sensoren 28 angeordnet sind.

Bei manchen Fahrzeugen 10, wie beispielsweise bei Nutzfahrzeugen, welche mit einer Flüssigkeit, Schüttgut oder lebenden Tieren beladen sind, liegt der Fahrzeugaufbau 24 bei Stillstand und bei Geradeausfahrt des Fahrzeugs 10 im Wesentlichen gerade auf dem Fahrgestell auf. Der Schwerpunkt befindet sich mittig, und auf jedes der Räder 22 wird im Wesentlichen dieselbe Radlast ausgeübt. Als Radlast bezeichnet man in der Regel die zwischen Fahrbahn und Rad senkrecht zur Fahrbahn auf das Rad wirkende Kraft. Bei einer Kurvenfahrt verlagert sich aufgrund der Zentrifugalkraft jedoch der Schwerpunkt. Dadurch verändert sich die Gewichtsverteilung. Das heißt, die Radlasten sind bei Kurvenfahrt in der Regel nicht mehr gleichmäßig verteilt. Durch eine Verlagerung der Ladung zu einer Seite hin (z. B. bei ungesicherter Ladung wie Flüssigkeit, Schüttgut oder Tiertransporten) verstärkt sich dieser Effekt noch weiter. Das Fahrzeug 10 neigt sich zu einer Seite hin. Das heißt, der Aufbau 24 wird auf einer Seite (z. B. links) weiter in Richtung Fahrbahn gedrückt als auf der anderen Seite (z. B. rechts). Grundsätzlich können dadurch während der Fahrt insbesondere Hub-, Nick- und Wankschwingungen sowie Stöße Auftreten. Eine Verlagerung des Schwerpunkts kann auch beispielsweise beim Beschleunigen, Abbremsen, Bergauf- und Bergabfahren auftreten.

Wird eine Achslast oder Radlast während der Fahrt bestimmt, ist diese somit meist nicht durchgehend gleich. Vielmehr verändert sich die Achslastverteilung/Radlastverteilung beispielsweise in Abhängigkeit des Straßenverlaufs und der Fahrbahnoberfläche. Einige Anwendungen machen es erforderlich, die Achslastverteilung/Radlastverteilung während der Fahrt möglichst genau zu bestimmen. Dabei können die Messergebnisse durch Umwelteinflüsse wie beispielsweise die Umgebungstemperatur und die Temperatur der entsprechenden Achsen 20 verfälscht werden. Um die Achslast/Radlast während des Betriebs des Fahrzeugs 10 zuverlässig bestimmen zu können, werden die Achslastsensoren 28 daher kalibriert.

Die Kalibrierung erfolgt dabei nach dem Herstellen des Fahrzeugs 10 und nach dem Anbringen der Achslastsensoren 28 an den Achsen 20 des Fahrzeugs 10, jedoch vor der Auslieferung des Fahrzeugs 10 an den Endkunden.

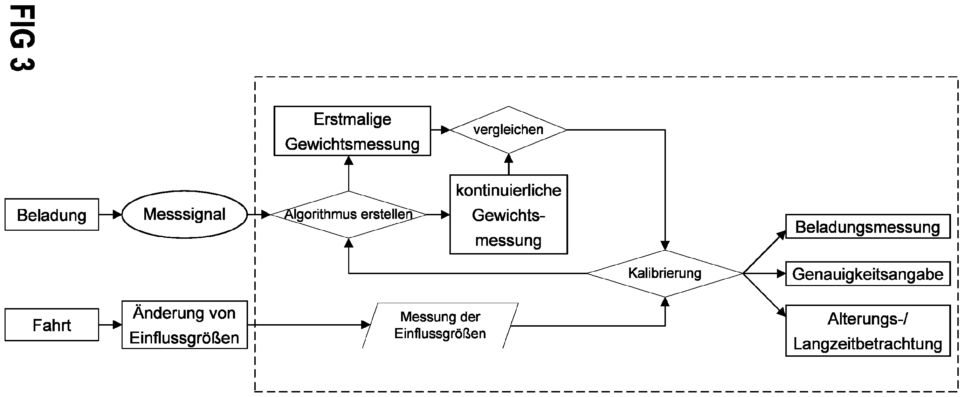

Dabei erfolgt zunächst eine Messung bei unbeladenem Fahrzeug 10 im Stillstand. Das heißt, jeder der am Fahrzeug 10 angebrachten Achslastsensoren 28 liefert einen entsprechenden Messwert. Wie in Figur 3 beispielhaft dargestellt, erfolgt dann eine Messung im Stillstand mit Beladung. Daraus ergeben sich pro Sensor 28 zwei Messsignale. Diese beiden ersten Messungen können beide unter denselben Umgebungsbedingungen (z. B. gleiche Umgebungstemperatur und gleiche Temperatur der Achsen 20) durchgeführt werden, beispielsweise bei Raumtemperatur. Die Temperatur der Achsen 20 kann im Wesentlichen auch der Raumtemperatur entsprechen. Zusätzlich zu diesen beiden Messungen können optional noch zusätzliche Messungen bei veränderten Umgebungsbedingungen durchgeführt werden. Beispielsweise können die Messungen im Stand ohne Ladung bei unterschiedlichen Umgebungstemperaturen und mit unterschiedlichen Achs-Temperaturen durchgeführt werden. Dieselben Messungen können bei denselben verschiedenen Umgebungstemperaturen und mit denselben unterschiedlichen Achs-Temperaturen auch unter Belastung (mit Ladung) durchgeführt werden. So ergibt sich für jeden der Sensoren 28 eine Reihe von Messwerten.

Dabei muss das Fahrzeug 10 während der Messungen nicht zwangsläufig tatsächlich beladen werden. Beispielsweise ist es auch möglich, mittels einer geeigneten Anordnung eine entsprechende Kraft auf den Fahrzeugaufbau 24 auszuüben und diesen in Richtung der Achsen 20 zu drücken. Messungen bei unterschiedlichen Temperaturen können beispielsweise in einer Wärme- oder einer Kältekammer durchgeführt werden. Dabei können Messungen beispielsweise in einem Temperaturbereich von zwischen -40 °C bis +100 °C durchgeführt werden. Dabei ist jedoch eine Messung bei jeder Temperatur in dem Temperaturbereich nicht erforderlich. Werden lediglich zwei Messungen durchgeführt, resultiert daraus bei Darstellung in einem entsprechenden Diagramm grundsätzlich eine Gerade. Je mehr Messungen durchgeführt werden und je mehr Messpunkte pro Sensor 28 vorhanden sind, umso besser kann der Kurvenverlauf jedoch abgebildet werden. Die Sensoren 28 sollten grundsätzlich in der Lage sein, Temperaturen von bis zu 120 °C über eine Dauer von etwa 2 Stunden zu überstehen. Bei Temperaturen über 100 °C ist es dabei jedoch in der Regel nicht gefordert, dass die Sensoren 28 noch genaue Messungen durchführen können.

Nach dem Durchführen der Messungen bei Stillstand des Fahrzeugs 10 kann eine Messung während der Fahrt des beladenen Fahrzeugs 10 durchgeführt werden. Diese Messungen können beispielsweise auf einem entsprechenden Prüfstand durchgeführt werden. Dabei können unterschiedliche Einflüsse nachgebildet werden. Beispielsweise können dynamisch während der Fahrt auftretende Kräfte nachgebildet werden, welche beispielsweise aus Kurvenfahrten, Beschleunigungs- und Abbremsvorgängen sowie Bergauf- und Bergabfahrten resultieren. Kräfte, welche in den genannten Situationen auftreten, beeinflussen die Durchbiegung und die Torsion einer Achse 20 und somit auch das Messsignal eines auf der Achse 20 angeordneten Sensors 28. Darüber hinaus kann das Messsignal auch durch thermische Ausdehnung der Achse 20, z. B. aufgrund von Temperaturänderungen, während der Fahrt beeinflusst werden. Gründe für die Änderungen der Temperatur der Achsen 20 eines Fahrzeugs sind beispielsweise eine Änderung der Umgebungstemperatur, Brems- und Antriebskräfte im Differential sowie das Abbremsen des Fahrzeugs 10 selbst.

Das Gewicht des Fahrzeugs 10 sowie einer darauf befindlichen Ladung ändern sich während der Fahrt in der Regel nicht. Dennoch ändern sich die Sensorsignale auch während der Fahrt kontinuierlich aufgrund unterschiedlicher Einflüsse (z. B. Temperaturschwankungen, ungleichmäßiger Straßenverlauf, Unregelmäßigkeiten im Straßenbelag). Dadurch dass sich die Ladung während der Fahrt nicht ändert, können somit während der Fahrt Informationen zu verschiedenen Störgrößen ermittelt werden. Unter der Annahme, dass die zuvor bei Stillstand durchgeführte wenigstens eine Lastmessung korrekt ist, können die ermittelten Informationen über den Störgrößen dazu verwendet werden, das System hinsichtlich dieser Einflussfaktoren zu kalibrieren. Dadurch lässt sich ein Modell zur Temperaturkalibrierung erstellen. Dieses einmal anhand eines Fahrzeugs 10 erstellte Modell kann anschließend auf baugleiche Fahrzeuge übertragen werden. Dabei ist es jedoch auch weiterhin möglich, Individuallösungen zu konfigurieren.

Diese Kalibrierung, zusammen mit den im Stillstand ermittelten Sensordaten, kann dazu verwendet werden, einen Algorithmus zu erstellen. Anhand dieses Algorithmus können später im Betrieb des Fahrzeugs 10 die durch eine kontinuierliche Gewichtsmessung erhaltenen Messwerte an sich ändernde Umgebungsbedingungen angepasst werden. Beispielsweise kann während einer Fahrt die Umgebungstemperatur deutlich steigen. Die Sensoren 28 liefern dann andere Messwerte als bei niedrigeren Temperaturen, obwohl die Ladung unverändert ist. Die veränderte Umgebungstemperatur kann dann jedoch berücksichtigt werden, um aus den Messwerten die korrekte Achslast/Radlast zu bestimmen. Der Algorithmus kann dabei beispielsweise auch ein selbstlernender Algorithmus sein (maschinelles Lernen, künstliche Intelligenz o. Ä.). Das heißt, es können die jeweils durch die kontinuierliche Messung erhaltenen Daten mit dem gespeicherten Modell verglichen werden. Auf diese Art und Weise können auch alterungsbedingte Veränderungen der Achse 20, der Federung oder anderer Fahrzeugkomponenten erkannt werden. Dies ermöglicht eine frühzeitige Diagnose und Fehlerbehebung.

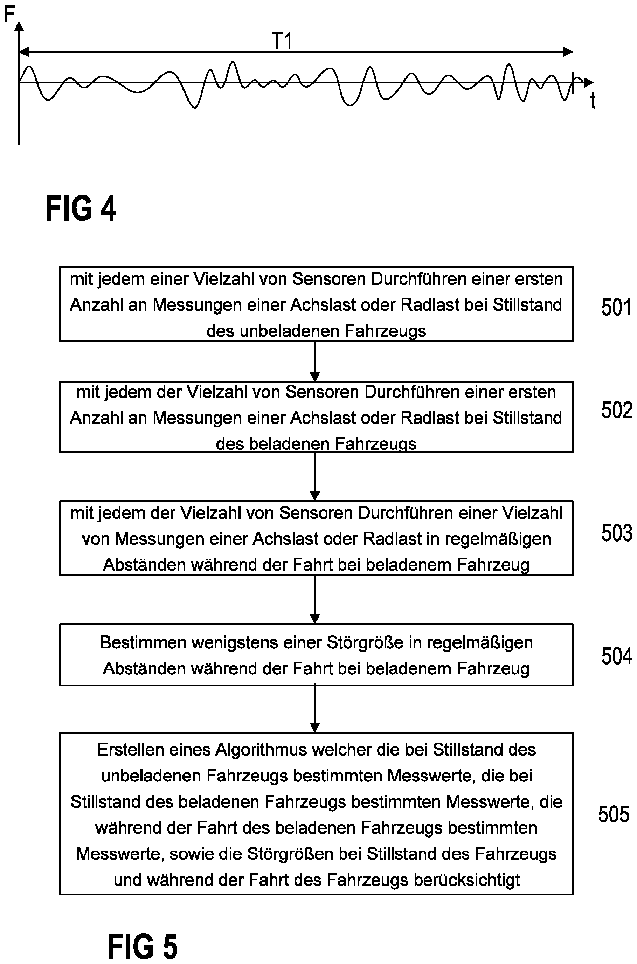

Wie bereits oben erwähnt, kann beispielsweise auch eine raue Fahrbahnoberfläche zu Änderungen der Messsignale führen. Derartige Schwankungen im Messsignal sind jedoch in der Regel nur kurzzeitig. Auch die Temperatur kann sich während einer Fahrt häufig ändern. Eine Änderung der Umgebungsbedingungen wie z. B. Umgebungstemperatur und Achsen-Temperatur führt jedoch in der Regel zu im Vergleich langfristigeren Änderungen der Messsignale. Starke Schwankungen der Umgebungstemperatur innerhalb kurzer Zeit sind in der Regel unwahrscheinlich. Daher kann das System Beispielsweise auch zwischen verschiedenen Ursachen unterscheiden. Dies ist beispielhaft in dem Diagramm in Figur 4 dargestellt. Figur 4 zeigt eine Änderung der auf eine Achse 20 ausgeübten Kraft über der Zeit. Dabei schwankt das Messsignal in dem dargestellten Zeitintervall T1 sehr stark. Das Zeitintervall T1 kann beispielsweise mehrere Sekunden oder mehrere Minuten lang sein. Derart starke Schwankungen sind häufig beispielsweise durch eine unebene Fahrbahnoberfläche bedingt. Das System kann hier beispielsweise einen Mittelwert bestimmen, um auf den korrekten Wert zu schließen.

Zusätzlich zu den Achslastsensoren 28 kann ein System beispielsweise Temperatursensoren aufweisen, die dazu ausgebildet sind, wenigstens die Umgebungstemperatur und die Achsen-Temperatur zu bestimmen. Diese Parameter können dann durch Anwenden des entsprechenden Algorithmus bei der Bestimmung der Achslast/Radlast mit berücksichtigt werden. Zusätzlich können beispielsweise Daten verschiedenen im Fahrzeug vorhandener Systeme mit berücksichtigt werden. Dies können beispielsweise Informationen in Bezug auf den Motor des Fahrzeugs oder das Bremssystem sein. Bei Sonderfahrzeugen können beispielsweise Informationen darüber mit berücksichtigt werden, ob z. B. ein Kipper betätigt wird, ob ein Straßenkehrsystem oder Streusystem aktiv ist, ob eine Baggerschaufel betätigt wird, etc. Sobald derartige Einflussgrößen erkannt werden, können diese ebenfalls in den selbstlernenden Algorithmus mit einfließen, so dass dieser sich weiter entwickelt.

Zusammenfassend kann der entwickelte Algorithmus reale Umwelteinflüsse kompensieren und dadurch eine ideale Mess-Kurve bestimmen. Der Algorithmus ist dadurch in der Lage, die Messgenauigkeit zu bestimmen.

Die Erfindung wurde oben Anhand von Achslastsensoren 28, die an einer Achse 20 des Fahrzeugs 10 angeordnet sind, beschrieben. Achslasten oder Radlasten können jedoch auch auf andere Art und Weise bestimmt werden. Beispielsweise können Sensoren 28 alternativ oder zusätzlich an einem Rad 22 (z. B. Felge) oder einem Federsystem des Fahrzeugs 10 angeordnet sein.

Jeder der Sensoren 28 kann beispielsweise jeweils wenigstens einen Dehnungsmessstreifen oder einen anderen, funktionsgleichen Sensor wie z. B. ein piezoresistives Element aufweisen. Die Verwendung eines Dehnungsmessstreifens pro Sensor 28 ist lediglich ein Beispiel. Jeder Sensor 28 kann beispielsweise auch mehr als einen Dehnungsmessstreifen aufweisen. Beispielsweise können Dehnungsmessstreifen in einer sogenannten Wheatstoneschen Messbrücke derart angeordnet sein, dass sich der thermische Einfluss im Sensor selbst kompensiert. Dehnungsmessstreifen können grundsätzlich eingesetzt werden, um Formänderungen (z. B. Dehnungen oder Stauchungen) an der Oberfläche von Bauteilen zu erfassen. Dehnungsmessstreifen können in Sensoren eingesetzt werden, mit denen Kräfte (Kraftaufnehmer) gemessen werden. Dabei können statische Belastungen und sich zeitlich ändernde Belastungen erfasst werden. Dehnungsmessstreifen können auf einer Achse 20 oder auf anderen Elementen des Fahrzeugs (z. B. Räder oder Federn) angeordnet werden, um z. B. eine Dehnung oder Stauchung der Achse 20 oder der anderen Elemente (z. B. eine Stauchung der Felgen) zu detektieren. Dabei können Dehnungsmessstreifen entweder direkt auf einer Achse 20 oder auf anderen Elementen des Fahrzeugs (z. B. Räder oder Federn) angeordnet werden, oder die Dehnungsmessstreifen können jeweils auf einem geeigneten Körper, welcher mit dem Dehnungsmessstreifen eine Einheit bzw. ein Sensorsystem bildet, angeordnet sein, wobei die Körper mit den darauf angeordneten Dehnungsmessstreifen dann an einer Achse 20 oder auf anderen Elementen des Fahrzeugs (z. B. Räder oder Federn) angeordnet (z. B. geklebt oder geschraubt) werden. Das grundsätzliche Prinzip von Dehnungsmessstreifen ist bekannt und wird an dieser Stelle daher nicht weiter erläutert.

Es kann jedoch auch jegliche andere Art von Sensor 28 Verwendung finden, die dazu geeignet ist, eine Achslast oder Radlast zu bestimmen.

Aus den mittels der verschiedenen Sensoren 28 ermittelten Werten kann dann das Gesamtgewicht des Fahrzeugs 10 samt Ladung bestimmt werden. Da das Gewicht des Fahrzeugs 10 selbst in der Regel bekannt ist, kann nach Subtraktion des Fahrzeuggewichts das Gewicht der darauf befindlichen Ladung berechnet werden.

Nach Auslieferung des Fahrzeugs 10 an den Endkunden kann vor jeder Fahrt das Gewicht des fertig beladenen Fahrzeugs 10 bestimmt werden. Zudem können auch Einflussgrößen bestimmt werden wie beispielsweise die Umgebungstemperatur und/oder die Temperatur der Achsen bzw. der entsprechenden Elemente des Fahrzeugs, an welchen die Sensoren 28 befestigt sind. Diese erstmalige Messung kann dann in Abhängigkeit von den Einflussgrößen kompensiert werden und das Ergebnis der erstmaligen kompensierten Gewichtsmessung gespeichert werden. Im Weiteren können während der Fahrt kontinuierlich Messungen durchgeführt werden, welche mit dem Ergebnis der erstmaligen Messung im Stand verglichen werden. Aus diesem Vergleich kann die Beladungsmessung korrigiert werden. Weiterhin ist es möglich eine prognostizierte Genauigkeit der Messungen basierend auf den Einflussgrößen über der Zeit bestimmt werden. Dies ermöglicht wie oben bereits beschrieben eine Fehler- und Defektanalyse.

Nun Bezug nehmend auf Figur 5 wird in einem Ablaufdiagramm ein Verfahren zum Kalibrieren eines Systems mit einer Vielzahl von Sensoren gemäß einer Ausführungsform schematisch dargestellt. Jeder der Sensoren ist dabei an einem Element eines Fahrzeugs angeordnet. Das Verfahren weist das Durchführen einer ersten Anzahl an Messungen einer Achslast oder Radlast bei Stillstand des unbeladenen Fahrzeugs mit jedem der Vielzahl von Sensoren auf (Schritt 501). Das Verfahren weist weiterhin das Durchführen einer ersten Anzahl an Messungen einer Achslast oder Radlast bei Stillstand des beladenen Fahrzeugs mit jedem der Vielzahl von Sensoren auf, wobei jede der Messungen jeweils unter Einfluss identischer Störgrößen wie eine der mit dem unbeladenen Fahrzeug durchgeführten Messungen durchgeführt wird (Schritt 502). Mit jedem der Vielzahl von Sensoren wird dann eine Vielzahl von Messungen einer Achslast oder Radlast in regelmäßigen Abständen während der Fahrt bei beladenem Fahrzeug durchgeführt (Schritt 503). Es wird dabei wenigstens eine Störgröße in regelmäßigen Abständen während der Fahrt bei beladenem Fahrzeug bestimmt (Schritt 504) und ein Algorithmus erstellt, welcher die bei Stillstand des unbeladenen Fahrzeugs bestimmten Messwerte, die bei Stillstand des beladenen Fahrzeugs bestimmten Messwerte, die während der Fahrt des beladenen Fahrzeugs bestimmten Messwerte, sowie die Störgrößen bei Stillstand des Fahrzeugs und während der Fahrt des Fahrzeugs berücksichtigt (Schritt 505).

Grundsätzlich ist es bei dem oben beschriebenen Verfahren möglich, anhand von überproportional großen Änderungen Rückschlüsse auf die Alterung zu ziehen. Ebenso ist es möglich anhand der ermittelten Messwerte abzuschätzen, wann ein Fahrzeug das nächste Mal zum Kundenservice muss oder wann das System neu kalibriert werden muss.

Zusätzlich zu dem oben beschriebenen Verfahren erlauben es beispielsweise kurze Standzeiten des Fahrzeugs ohne wesentliche kontinuierliche Veränderungen der Rahmenbedingungen, jedoch mit Sprungänderung, eine Fehlmessung bei einer durchgeführten Messung mit dem Ablauf "Fahren-Bremsen-Bremse loslassen", welcher bei bis zu 12 % oder sogar mehr liegen kann, zu erkennen. Dies kann dann ebenfalls in den selbstlernenden Algorithmus mit einfließen.

## Patentansprüche

1. Verfahren zum Kalibrieren eines Systems mit einer Vielzahl von Sensoren (28), wobei jeder der Sensoren an einem Element eines Fahrzeugs (10), nämlich an einer Achse (20) des Fahrzeugs (10) und/oder einem Rad (22) oder einem Federsystem des Fahrzeugs (10), angeordnet ist, das Verfahren weist auf:
mit jedem der Vielzahl von Sensoren (28) Durchführen einer ersten Anzahl an Messungen einer Achslast oder Radlast bei Stillstand des unbeladenen Fahrzeugs (10);
mit jedem der Vielzahl von Sensoren (28) Durchführen einer ersten Anzahl an Messungen einer Achslast oder Radlast bei Stillstand des beladenen Fahrzeugs (10), wobei jede der Messungen jeweils unter Einfluss identischer Störgrö-ßen wie eine der mit dem unbeladenen Fahrzeug (10) durchgeführten Messungen durchgeführt wird;
mit jedem der Vielzahl von Sensoren (28) Durchführen einer Vielzahl von Messungen einer Achslast oder Radlast in regelmäßigen Abständen während der Fahrt bei beladenem Fahrzeug (10);
Bestimmen wenigstens einer Störgröße in regelmäßigen Abständen während der Fahrt bei beladenem Fahrzeug (10); und
Erstellen eines Algorithmus, welcher die bei Stillstand des unbeladenen Fahrzeugs (10) bestimmten Messwerte, die bei Stillstand des beladenen Fahrzeugs (10) bestimmten Messwerte, die während der Fahrt des beladenen Fahrzeugs (10) bestimmten Messwerte, sowie die Störgrößen bei Stillstand des Fahrzeugs (10) und während der Fahrt des Fahrzeugs (10) berücksichtigt,
wobei die Störgrößen eine Umgebungstemperatur aufweisen, das Verfahren ist **dadurch gekennzeichnet,**
**dass** anhand dieses Algorithmus im Betrieb des Fahrzeugs (10) durch eine kontinuierliche Gewichtsmessung erhaltene Messwerte an sich ändernde Umgebungsbedingungen, nämlich eine veränderte Umgebungstemperatur, angepasst werden können
und **dass** der Algorithmus ein selbstlernender Algorithmus ist, so dass die jeweils durch die kontinuierliche Messung erhaltenen Daten mit einem gespeicherten Modell zur Temperaturkalibrierung verglichen werden, wodurch alterungsbedingte Veränderungen der Achse (20), der Federung oder des Rades (22) erkannt werden.

2. Verfahren nach Anspruch 1, das weiterhin aufweist:
Bestimmen eines Fahrzeug-Gesamtgewichts anhand der mit jedem der Vielzahl von Sensoren (28) bei Stillstand des beladenen Fahrzeugs (10) ermittelten Messwerte.

3. Verfahren nach Anspruch 2, wobei das Fahrzeug-Gesamtgewicht während den Messungen der Achslast oder Radlast bei Stillstand des beladenen Fahrzeugs (10) bekannt ist.

4. Verfahren nach einem der Ansprüche 1 bis 3, wobei die Störgrößen eine Temperatur der Elemente aufweisen, an welchen die Vielzahl von Sensoren (28) angebracht sind.

5. Verfahren nach Anspruch 4, wobei jeder der Vielzahl von Sensoren (28) dazu ausgebildet ist, eine Dehnung oder Stauchung des entsprechenden Elementes des Fahrzeugs (10) zu bestimmen, und wobei die Achslast oder Radlast von der bestimmten Dehnung oder Stauchung abhängt.

6. Verfahren nach einem der Ansprüche 1 bis 5, wobei die Messungen der Achslast oder Radlast bei Stillstand des unbeladenen und des beladenen Fahrzeugs (10) wenigstens bei einer definierten Umgebungstemperatur durchgeführt werden.

7. Verfahren nach Anspruch 6, wobei die Messungen der Achslast oder Radlast bei Stillstand des unbeladenen und des beladenen Fahrzeugs (10) bei einer Vielzahl unterschiedlicher definierter Temperaturen in einem Temperaturbereich von -40 °C bis +100 °C durchgeführt werden.

8. Verfahren nach einem der Ansprüche 2 bis 7, das weiterhin aufweist:
Vergleichen des bei Stillstand des beladenen Fahrzeugs (10) bestimmten Gesamtgewichts mit dem bekannten Fahrzeug-Gesamtgewicht; und
Bestimmen des Einflusses der Störgrößen auf die wenigstens eine durchgeführte Messung.

9. Verfahren nach einem der Ansprüche 1 bis 8, das weiterhin aufweist:
Durchführen einer ersten Messung der Achslast oder Radlast eines beladenen Fahrzeugs (10) bei Stillstand des Fahrzeugs (10);
Bestimmen von Störgrößen, welche die erste Messung beeinflussen;
Kompensieren der Messergebnisse der ersten Messung anhand des zuvor erstellten Algorithmus und anhand der bestimmten Störgrößen;
Durchführen weiterer Messungen während der Fahrt des beladenen Fahrzeugs (10);
Vergleichen der Messergebnisse der weiteren Messungen mit dem kompensierten Messergebnis der ersten Messung; und
Korrektur der Messergebnisse der weiteren Messungen anhand des Vergleiches.

10. Verfahren nach Anspruch 9, das weiterhin aufweist:
kontinuierliches Bestimmen der Störgrößen während der Fahrt des Fahrzeugs (10); und
Korrektur der Messergebnisse der weiteren Messungen anhand der bestimmten Störgrößen.

## Claims

1. Method for calibrating a system comprising a plurality of sensors (28), wherein each of the sensors is arranged on an element of a vehicle (10), namely on an axle (20) of the vehicle (10) and/or a wheel (22) or a suspension system of the vehicle (10), the method comprising:
carrying out a first number of measurements of an axle load or wheel load when the unladen vehicle (10) is at a standstill using each of the plurality of sensors (28);
carrying out a first number of measurements of an axle load or wheel load when the laden vehicle (10) is at a standstill using each of the plurality of sensors (28), wherein each of the measurements is carried out in each case under the influence of disturbance variables identical to those of one of the measurements carried out for the unladen vehicle (10);
carrying out a plurality of measurements of an axle load or wheel load at regular intervals while the laden vehicle (10) is travelling using each of the plurality of sensors (28);
determining at least one disturbance variable at regular intervals while the laden vehicle (10) is travelling; and
creating an algorithm that takes into account the measured values determined when the unladen vehicle (10) is at a standstill, the measured values determined when the laden vehicle (10) is at a standstill, the measured values determined while the laden vehicle (10) is travelling, and the disturbance variables when the vehicle (10) is at a standstill and while the vehicle (10) is travelling,
wherein the disturbance variables include an ambient temperature, the method being **characterized**
**in that**, on the basis of this algorithm, measured values obtained as a result of a continuous weight measurement can be adapted to changing ambient conditions, namely a changed ambient temperature, during operation of the vehicle (10),
and **in that** the algorithm is a self-learning algorithm, such that the data obtained in each case as a result of the continuous measurement are compared with a stored model for temperature calibration, as a result of which ageing-related changes to the axle (20), the suspension or the wheel (22) are identified.

2. Method according to Claim 1, which further comprises:
determining a total vehicle weight on the basis of the measured values ascertained using each of the plurality of sensors (28) when the laden vehicle (10) is at a standstill.

3. Method according to Claim 2, wherein the total vehicle weight is known during the measurements of the axle load or wheel load when the laden vehicle (10) is at a standstill.

4. Method according to one of Claims 1 to 3, wherein the disturbance variables include a temperature of the elements on which the plurality of sensors (28) are fitted.

5. Method according to Claim 4, wherein each of the plurality of sensors (28) is designed to determine an expansion or compression of the corresponding element of the vehicle (10), and wherein the axle load or wheel load depends on the determined expansion or compression.

6. Method according to one of Claims 1 to 5, wherein the measurements of the axle load or wheel load when the unladen and the laden vehicle (10) are at a standstill are carried out at least at one defined ambient temperature.

7. Method according to Claim 6, wherein the measurements of the axle load or wheel load when the unladen and the laden vehicle (10) are at a standstill are carried out at a plurality of different defined temperatures in a temperature range from -40°C to +100°C.

8. Method according to one of Claims 2 to 7, which further comprises:
comparing the total weight determined when the laden vehicle (10) is at a standstill with the known total vehicle weight; and
determining the influence of the disturbance variables on the at least one measurement carried out.

9. Method according to one of Claims 1 to 8, which further comprises:
carrying out a first measurement of the axle load or wheel load of a laden vehicle (10) when the vehicle (10) is at a standstill;
determining disturbance variables that influence the first measurement;
compensating for the measurement results of the first measurement on the basis of the previously created algorithm and on the basis of the determined disturbance variables;
carrying out further measurements while the laden vehicle (10) is travelling;
comparing the measurement results of the further measurements with the compensated measurement result of the first measurement; and
correcting the measurement results of the further measurements on the basis of the comparison.

10. Method according to Claim 9, which further comprises:
continuously determining the disturbance variables while the vehicle (10) is travelling; and
correcting the measurement results of the further measurements on the basis of the determined disturbance variables.

## Revendications

1. Procédé d'étalonnage d'un système comprenant une pluralité de capteurs (28), dans lequel chacun des capteurs est disposé sur un élément d'un véhicule (10), à savoir un essieu (20) du véhicule (10) et/ou une roue (22) ou un système de suspension du véhicule (10), le procédé comprenant :
pour chacun de la pluralité de capteurs (28), la réalisation d'un premier nombre de mesures d'une charge sur essieu ou d'une charge sur roue lorsque le véhicule (10) non chargé est à l'arrêt ;
pour chacun de la pluralité de capteurs (28), la réalisation d'un premier nombre de mesures d'une charge sur essieu ou d'une charge sur roue lorsque le véhicule (10) chargé est à l'arrêt, dans lequel chacune des mesures est respectivement réalisée sous l'influence de grandeurs perturbatrices identiques telles que l'une des mesures effectuées lorsque le véhicule (10) est non chargé ;
pour chacun de la pluralité de capteurs (28), la réalisation d'une pluralité de mesures d'une charge sur essieu ou d'une charge sur roue à intervalles réguliers pendant le déplacement, lorsque le véhicule (10) est chargé ;
la détermination d'au moins une grandeur perturbatrice à intervalles réguliers pendant le déplacement, lorsque le véhicule (10) est chargé ; et
la création d'un algorithme qui prend en compte les valeurs de mesure déterminées lorsque le véhicule (10) non chargé est à l'arrêt, les valeurs de mesure déterminées lorsque le véhicule (10) chargé est à l'arrêt, les valeurs de mesure déterminées pendant le déplacement du véhicule (10) chargé, ainsi que les grandeurs perturbatrices lorsque le véhicule (10) est à l'arrêt et pendant le déplacement du véhicule (10),
dans lequel les grandeurs perturbatrices présentent une température ambiante, le procédé étant **caractérisé**
**en ce que**, sur la base dudit algorithme, des valeurs de mesure obtenues pendant le fonctionnement du véhicule (10) par une mesure de poids continue peuvent être adaptées à des conditions ambiantes changeantes, à savoir à une température ambiante modifiée, et
**en ce que** l'algorithme est un algorithme à auto-apprentissage, de sorte que les données obtenues respectivement par la mesure continue sont comparées à un modèle mémorisé pour l'étalonnage en température, ce qui permet de détecter des modifications de l'essieu (20), de la suspension ou de la roue (22) qui sont induites par le vieillissement.

2. Procédé selon la revendication 1, comprenant en outre :
la détermination d'un poids total du véhicule sur la base des valeurs de mesure déterminées par chacun de la pluralité de capteurs (28) lorsque le véhicule (10) chargé est à l'arrêt.

3. Procédé selon la revendication 2, dans lequel le poids total du véhicule est connu pendant les mesures de la charge sur essieu ou de la charge sur roue lorsque le véhicule (10) chargé est à l'arrêt.

4. Procédé selon l'une quelconque des revendications 1 à 3, dans lequel les grandeurs perturbatrices comprennent une température des éléments sur lesquels la pluralité de capteurs (28) sont montés.

5. Procédé selon la revendication 4, dans lequel chacun de la pluralité de capteurs (28) est conçu pour déterminer un allongement ou une compression de l'élément correspondant du véhicule (10), et dans lequel la charge sur essieu ou la charge sur roue dépend de l'allongement ou de la compression déterminée.

6. Procédé selon l'une quelconque des revendications 1 à 5, dans lequel les mesures de la charge sur essieu ou de la charge sur roue sont réalisées lorsque le véhicule (10) non chargé ou chargé est à l'arrêt au moins à une température ambiante définie.

7. Procédé selon la revendication 6, dans lequel les mesures de la charge sur essieu ou de la charge sur roue sont réalisées lorsque le véhicule (10) non chargé ou chargé est à l'arrêt, à une pluralité de températures définies différentes, dans une plage de températures de -40 °C à +100 °C.

8. Procédé selon l'une quelconque des revendications 2 à 7, comprenant en outre :
la comparaison du poids total déterminé lorsque le véhicule (10) chargé est à l'arrêt au poids total connu du véhicule ; et
la détermination de l'influence des grandeurs perturbatrices sur ladite au moins une mesure réalisée.

9. Procédé selon l'une des quelconque revendications 1 à 8, comprenant en outre :
la réalisation d'une première mesure de la charge sur essieu ou de la charge sur roue d'un véhicule (10) chargé lorsque le véhicule (10) est à l'arrêt ;
la détermination de grandeurs perturbatrices qui influencent la première mesure ;
la compensation des résultats de mesure de la première mesure sur la base de l'algorithme créé précédemment et sur la base des grandeurs perturbatrices déterminées ;
la réalisation d'autres mesures pendant le déplacement du véhicule (10) chargé ;
la comparaison des résultats de mesure des autres mesures au résultat de mesure compensé de la première mesure ; et
la correction des résultats de mesure des autres mesures sur la base de la comparaison.

10. Procédé selon la revendication 9, comprenant en outre :
la détermination continue des variables perturbatrices pendant le déplacement du véhicule (10) ; et
la correction des résultats de mesure des autres mesures sur la base des grandeurs perturbatrices déterminées.
